(19) Europäisches Patentamt
European Patent Office
Office européen des brevets

(11) **EP 3 192 115 B1**

(12) **EUROPÄISCHE PATENTSCHRIFT**

(45) Veröffentlichungstag und Bekanntmachung des Hinweises auf die Patenterteilung:
**31.03.2021 Patentblatt 2021/13**

(21) Anmeldenummer: **15750255.0**

(22) Anmeldetag: **13.08.2015**

(51) Int Cl.:
*C01G 49/00* (2006.01)    *H01M 4/136* (2010.01)
*C09K 11/77* (2006.01)    *G21K 4/00* (2006.01)
*H01M 4/1397* (2010.01)    *H01M 4/58* (2010.01)
*H01M 10/052* (2010.01)    *H01M 4/131* (2010.01)
*H01M 4/36* (2006.01)    *H01M 4/485* (2010.01)
*C01G 1/06* (2006.01)    *H01B 1/06* (2006.01)

(86) Internationale Anmeldenummer:
**PCT/EP2015/001667**

(87) Internationale Veröffentlichungsnummer:
**WO 2016/037681 (17.03.2016 Gazette 2016/11)**

(54) **ELEKTRODENMATERIAL, VERFAHREN ZU SEINER HERSTELLUNG UND LITHIUM IONEN BATTERIE**

ELECTRODE MATERIAL, PRODUCTION METHOD THEREOF, AND LITHIUM ION BATTERY

MATÉRIAU D'ÉLECTRODE, PROCÉDÉ DE PRODUCTION DE CELUI-CI ET BATTERIE À IONS LITHIUM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.09.2014 DE 102014112928**

(43) Veröffentlichungstag der Anmeldung:
**19.07.2017 Patentblatt 2017/29**

(73) Patentinhaber: **Karlsruher Institut für Technologie 76131 Karlsruhe (DE)**

(72) Erfinder:
• **LIESER, Georg**
  **76199 Karlsruhe (DE)**
• **DE BIASI, Lea**
  **76228 Karlsruhe (DE)**
• **DRÄGER, Christoph**
  **76135 Karlsruhe (DE)**
• **BINDER, Joachim**
  **76227 Karlsruhe (DE)**
• **GESSWEIN, Holger**
  **76131 Karlsruhe (DE)**

(56) Entgegenhaltungen:
**DE-T5-112012 001 463    JP-A- 2001 176 510**

• YUKINORI KOYAMA ET AL: "New Fluoride Cathodes for Rechargeable Lithium Batteries", JOURNAL OF THE ELECTROCHEMICAL SOCIETY, Bd. 147, Nr. 10, 1. Januar 2000 (2000-01-01), Seite 3633, XP055225086, ISSN: 0013-4651, DOI: 10.1149/1.1393951
• YAOBO YIN ET AL: "CRYSTAL CHEMISTRY OF COLQUIRIITE-TYPE FLUORIDES", CHEMISTRY OF MATERIALS, AMERICAN CHEMICAL SOCIETY, US, Bd. 4, Nr. 3, 1. Mai 1992 (1992-05-01), Seiten 645-648, XP000274583, ISSN: 0897-4756, DOI: 10.1021/CM00021A028
• Werner Viebahn ET AL: "Notizen: Fluor-Trirutile LiMeIIMeIIIF6 und zwei neue Sauerstoff-Trirutile LiMeVMeVIO6", Zeitschrift fur Naturforschung - Section B Journal of Chemical Sciences, vol. 22, no. 11, 1 January 1967 (1967-01-01), XP055490706, DE ISSN: 0932-0776, DOI: 10.1515/znb-1967-1125
• Peng Liao ET AL: "Lithium Intercalation in LiFe[sub 2]F[sub 6] and LiMgFeF[sub 6] Disordered Trirutile-Type Phases", Journal of The Electrochemical Society, vol. 157, no. 3, 1 January 2010 (2010-01-01), page A355, XP055490709, ISSN: 0013-4651, DOI: 10.1149/1.3294788

**Beschreibung**

Die vorliegende Erfindung betrifft einen quaternären-Lithium-Metall-Fluorid, ein Verfahren zu seiner Herstellung und dessen Verwendung als Elektrodenmaterial in einer Lithium-Ionen-Zelle sowie eine Lithium-Ionen-Batterie.

Die Erfindung ist auf dem Gebiet der elektrochemischen Energiespeicherung angesiedelt. Auf Grund der hohen Energiedichte, Sicherheit und Langzeitstabilität werden Lithium-Ionen-Batterien, die auf der Basis des Lithium-Ionenaustauschs arbeiten, in einer Vielzahl von Anwendungen als Energiespeicher verwendet. Die typischen Anforderungen an einen Energiespeicher auf Batterieebene, insbesondere bezüglich dessen Energiedichte, Leistungsdichte, Sicherheit, Langlebigkeit, Umweltverträglichkeit und Kosten, gelten auf Zellebene und schließlich für die einzelnen Komponenten, d. h. auch für das Elektrodenmaterial, sprich für das Anoden- bzw. Kathodenmaterial. Bezüglich des Kathodenmaterials wurden Entwicklungen mit Interkalationsmaterialien durchgeführt, die Lithium reversibel einlagern können.

Im Falle von Aktivmaterialien von Elektroden wird durch den Ein- und Ausbau von Lithium das Wirtsgitter stark beansprucht. Dies führt zu einer mechanischen Degradation der Elektrodenmaterialien bzw. Elektroden, wodurch z. B. die Kontaktierung zwischen dem Aktivmaterial und dem Leitfähigkeitsadditiv bzw. dem Ableiter nicht mehr gewährleistet ist. Diese Degradation tritt bevorzugt bei Wirtsgittern auf, welche beim Zyklieren eine hohe Volumenänderung aufweisen. Materialien ohne oder mit geringer Volumenänderung, sogenannte zero strain Elektrodenmaterialien zeichnen sich deshalb durch eine sehr gute Lebensdauer aus.

Im Bereich der Anodenmaterialien von Li-Ionen-Batterien beschreiben Ohzuku et al. in Zero-strain insertion material for Li[Li1/3Ti5/3]O4 for rechargeable lithium cells, J. Electrochem. Soc. 142 (5) p. 1431 (1995), dass Lithium Titanat $Li_4Ti_5O_{12}$ (LTO) ein zero strain Verhalten aufweist. Dessen Volumenänderung während der Lithium-Insertion beträgt maximal 0,2%. Dieser hat aufgrund der Lebensdauer Anwendungsreife erreicht und dies trotz geringer Energiedichte.

Lithiummetalloxide und polyanionische Aktivmaterialien führen aber in Kombination mit einem organischen Elektrolyten bei einer Betriebsstörung zu einer starken exothermen Reaktion, dem sogenannten Thermal Runaway. Unter diesen Bedingungen wird das Wirtsgitter der Elektrode thermisch zerlegt, wodurch z.B. Sauerstoff entsteht, welcher den Thermal Runaway unterstützt. Zudem sind Lithiummetalloxide nur bis 5,1 V vs. Lithium elektrochemisch stabil, da sonst die Sauerstoffanionen aus dem Wirtsgitter elektrochemisch oxidiert werden. Abhilfe schaffen hier Lithiumübergangsmetallfluoride aufgrund ihrer thermodynamischen Stabilität und Unbrennbarkeit, sodass sie zu einer erhöhten Sicherheit in Batteriezellen beitragen. Hinzu kommt, dass Lithiummetallfluoride das Potential haben, hohe Zellspannungen und dadurch höhere Energiedichten zu liefern.

Elektrochemisch gut bekannt und von Liao et al. in Lithium Intercalation in LiFe2F6 and LiMgFeF6 Disordered Trirutile-Type Phases, J. Electrochem. Soc. 157 (3) p. A355 (2010) und Lieser et al. in Sol-Gel Based Synthesis of LiNiFeF6 and Its Electrochemical Characterization, J. Electrochem. Soc. 161 (6) p. A1071 (2014) beschrieben, sind quaternäre Lithiumübergangsmetallfluoride mit Trirutilstruktur (z.B. $LiFeFeF_6$ bzw. $LiNiFeF_6$), die während dem Zyklieren eine Volumenänderung von größer als 3% aufweisen.

Auf Kathodenseite konnte für Lithium-Ionen-Batterien bisher kein Material mit vergleichbaren intrinsischen Eigenschaften wie das zero-strain Verhalten von LTO gefunden werden. Cho et al. Zero-strain intercalation cathode for rechargeable Li-ion cell, Anw. Chem. Int. Ed. 40 (18) p. 3367 (2001) haben gezeigt, dass Volumenänderungen bei dem weitverbreiteten Kathodenmaterial $LiCoO_2$ durch das Auftragen einer Beschichtung extrinsisch unterdrückt wird. $LiCoO_2$ durchläuft nämlich während des Li-Ausbaus beim Laden mehrere Phasenumwandlungen und die Umwandlung von einer kubischen zu einer hexagonal dichten Struktur der Sauerstoffatome führt zu einer Verzerrung des Wirtsgitters. Dies verursacht eine Volumenzunahme von mehr als 2,0%.

Koyama et al. offenbaren in New fluoride cathodes for rechargeable lithium batteries, Journal of the electrochemical Society (2000), Vol. 147, S. 3633 eine theoretische Volumenänderung von 0,4 für $LiCaCoF_6$, wobei diese bei der Delithiierung berechnet wird d.h. zwischen $LiCaCoF_6$ und $CaCoF_6$. Ähnlich offenbart JP 2001 176510 A eine Lithiumionen-Batterie umfassend ein Komposit-Lithium-Metallfluorid als Elektrodenmaterial mit der Formel $LiAMF_6$, wobei A=Mg, Ca, Sr, Ba, Zn, Cd, Hg und M= Ti, V, Cr, Mn, Fe, Co, Ni.

Yin et al. beschreiben in Crystal chemistry of Colquiriitetype fuorides, Chem. Mat. (1992), Vol. 4, S. 645 die Kristallchemie von Colquiriite-Fluoriden, die als Monokristalle hergestellt wurden.

DE 11 2012 001463 T5 beschreibt ein Verfahren zur Herstellung eines Elektrodenmaterials umfassend mindestens ein Lithium-Metall-Fluorid mit einer Colquiriite Struktur.

Viebahn et al. offenbaren in Notizen: Fluor-Trirutile LiMeIIMeIIIF6 und zwei neue Sauerstoff-Trirutile LiMeVMeVIO6, Zeitschrift für Naturforschung - Section B Journal of Chemical Sciences (1967) Vol. 22, XP055490706 Fluoride der Formel $LiM^{II}M^{III}F$, die in der Tirutilstruktur kristallisieren. Peng Liao et al. offenbaren in Lithium intercalation in LiFe2F6 and LiMgFeF6 disordered trirutile-type phases, J. Electrochem. Soc. (2010), Vol. 157, S.A355 ebenfalls zwei Kathodenmaterialien mit der Formel $LiF_2F_6$ und $LiMgFeF_6$, die in der Trirutilstruktur kristallisieren.

Ausgehend hiervon besteht die Aufgabe der vorliegenden Erfindung darin, ein Elektrodenmaterial vorzuschlagen, das die vorher genannten Einschränkungen und Nachteile des Standes der Technik nicht aufweist.

Insbesondere soll ein Elektrodenmaterial mit einer erhöhten Lebensdauer bereitgestellt werden, ohne dass die Zyklenstabilität und die elektrochemische Aktivität eingeschränkt werden.

Weiterhin sollen ein Verfahren zur Herstellung eines Elektrodenmaterials sowie eine Lithium-Ionen Zelle und eine Lithium-Ionen Batterie, umfassend das Elektrodenmaterial vorgeschlagen werden.

Diese Aufgabe wird im Hinblick auf das Elektrodenmaterial durch die Merkmale des *Anspruchs 1,* im Hinblick auf das Verfahren zur Herstellung des Elektrodenmaterials durch die Merkmale des *Anspruchs 4,* im Hinblick auf die Lithium-Ionen Zelle durch den *Anspruch 5* und im Hinblick auf die Lithium-Ionen Batterie durch den *Anspruch 6* gelöst. Die Unteransprüche beschreiben jeweils vorteilhafte Ausgestaltungen der Erfindung.

Die vorliegende Erfindung befasst sich mit einem Elektrodenmaterial umfassend mindestens ein quaternäres Lithium-Metall-Fluorid, wobei das quaternäre Lithium-Metall-Fluorid folgende Formel aufweist:

$$\text{Li}_{1+x}\text{Me}_1{}^{2+}\text{Me}_2{}^{(3-x)+}\text{F}_6 \text{ mit } 0 \leq x \leq 1$$

wobei $Me_1$ mindestens ein Metall aus der Liste der Elemente {Ca, Sr, Ba, Pb, V, Cr, Cu, Ge, Cd, Sn} ist und $Me_2$ mindestens ein Metall aus der Liste der Elemente {Ti, V, Cr, Mn, Fe, Co, Ni, Cu, Zn, Y, Zr, Nb, Mo, B, Al, Ga, In, Tl} ist,
wobei $Me_1$ ungleich $Me_2$ ist und
wobei $Me_1$ ein Metallion der Oxidationsstufe +II und $Me_2$ ein Metallion einer Oxidationsstufe zwischen +II und +III ist.

Die Oxidationsstufe des Metalls $Me_2$ ist gleich +III-x und weicht somit in Abhängigkeit der Lithiierung von +III auf +II ab.

Vorzugsweise ist $Me_1$ mindestens ein Metall aus der Liste der Elemente {Ca, Cd, Sr, Ba, Pb} und $Me_2$ mindestens ein Metall aus der Liste der Elemente {Ti, V, Cr, Fe, Co, Ni}.

In einer besonderen Ausgestaltung umfasst das Elektrodenmaterial ein quaternäres Lithium-Metall-Fluorid, welches die Formel $\text{LiMe}_1{}^{2+}\text{Me}_2{}^{3+}\text{F}_6$ aufweist.

Vorzugsweise ist die Kristallstruktur des quaternären Lithium-Metall-Fluorids eine Colquiriite-Struktur ist.

In einer weiteren Ausgestaltung ist das Verhältnis der Metallionenradien r der Metalle $Me_1$ zu $Me_2$

$\dfrac{r(Me_1)}{r(Me_2)}$ größer als 1,2 bevorzugt als 1,4.

Weiterhin ist vorzugsweise $Me_1$ Kalzium Ca.

Insbesondere ist $Me_2$ Eisen Fe.

In einer besonderen Ausgestaltung ist das Elektrodenmaterial ein Kathodenmaterial oder ein Anodenmaterial, das bei geringen Spannungen eingesetzt wird.

Ein erfindungsgemäßes Elektrodenmaterial ist erhältlich durch ein mehrstufiges Herstellungsverfahren. Zunächst werden mindestens ein Lithium-Fluorid, mindestens ein $Me_1$-Fluorid und mindestens ein $Me_2$-Fluorid als binäre Fluoride als Edukte bereitgestellt. Daraufhin erfolgt das Vortrocknen der binären Fluoride. Anschließend werden die Edukte gemischt und anschließend unter Schutzgas kalziniert. Daraus entsteht ein Lithium-Metall Fluorid als pulverförmiges Material. Nach Hinzufügen eines Leitfähigkeitsadditivs und anschließend eines Binders zu dem kalzinierten Gemisch, entsteht ein Elektrodenmaterial umfassend mindestens ein quaternäres Lithium-Metall-Fluorid. Schließlich wird das Elektrodenmaterial an einen Ableiter angebracht. Vorzugsweise wurde das Gemisch mit einem Leitfähigkeitsadditiv in einer Planetenkugelmühle vermahlen.

Die Erfindung betrifft schließlich eine Lithium-Ionen-Zelle, die mindestens ein erfindungsgemäßes Elektrodenmaterial umfasst. In einer besonderen Ausgestaltung umfasst die Lithium-Ionen-Zelle einen nicht wässrigen Elektrolyten und einen Separator oder einen Festkörperelektrolyten.

Weiterhin betrifft die Erfindung eine Lithium-Ionen Batterie, die mindestens eine Lithium-Ionen-Zelle aufweist, die wiederum mindestens ein erfindungsgemäßes Elektrodenmaterial aufweist.

Überraschenderweise zeigt das erfindungsgemäße Elektrodenmaterial ein *zero strain* Verhalten, d.h. dass beim Ein und Ausbau von Lithium in das Elektrodenmaterial während der Zyklierung keine oder eine geringe Volumenänderung stattfindet. Erwartet wäre eine Volumenausdehnung während einer Lithium Insertion in ein Wirtsgitter, die auf 2 Effekte zurückzuführen sind:

- zum einen benötigt das zu insertierende Lithium-Kation Platz im Wirtsgitter.
- zum anderen wird der Ionenradius des Kations durch die Reduktion eines immobilisierten Redoxzentrums (z.B. an einem Metallkation) $Fe^{3+}/Fe^{2+}$ vergrößert, wodurch der Metallkation-Anion Bindungsabstand maßgeblich beeinflusst wird. Dies hat einen unmittelbaren Einfluss auf das Volumen der Wirtsstruktur.

Eine Erklärung zu dieser überraschend geringen Volumenänderung liegt vermutlich an der strukturellen Besonderheit. So weist beispielsweise der Colquiriite Strukturtyp zahlreiche Gitterplätze auf, welche für das zu insertierende Lithium prädestiniert sind. Die zu erwartende Volumenänderung in dem Wirtsgitter aufgrund der Redox-Reaktion des Übergangmetalls tritt deshalb nicht auf, da aufgrund des Ionenradienverhältnisses r(Me1)/r(Me2) der $[\text{FeF}_6]^{3-}$ Oktaeder auch in der reduzierten $[\text{FeF}_6]^{4-}$ Variante immer noch kleiner ist als die restlichen Metallfluoridpolyeder dieser Wirtsstruktur.

In einer besonderen Ausgestaltung beträgt die Volumenänderung weniger als 2%, bevorzugt weniger als 1%, besonders bevorzugt weniger als 0,5%. Die geringfügige bzw. nicht vorhandene Änderung der Gitterparameter des Wirtsgitters während dem Zyklieren erhöht die Zyklenstabilität. Vorzugsweise wird das erfindungsgemäße Elektrodenmaterial in Kombination mit Lithiumtitanate als Anodenmaterial verwendet, wo Aspekte wie Sicherheit und Lebensdauer im Vordergrund stehen, d.h. bevorzugt für stationäre Energiespeichersysteme.

Ein besonderer Vorteil der vorliegenden Erfindung ist, die hohe Lebensdauer des erfindungsgemäßen Elektrodenmaterials und dadurch der erfindungsgemäßen Lithium-Ionen Zelle und Batterie, die mit dem überraschend *zero strain* Verhalten einhergeht.

Ein weiterer Vorteil des erfindungsgemäßen Elektrodenmaterials ist die Kombination der hohen Lebensdauer mit einer hohen elektrochemischen Aktivität und Zyklenstabilität.

Weiterhin sind die erfindungsgemäßen Lithiummetallfluoride thermodynamisch stabil und unbrennbar und bieten somit eine intrinsische Sicherheit. Das Wirtsgitter setzt bei einem "Thermal Runaway" keinen Sauerstoff frei. Zusätzlich haben Lithiummetallfluoride das Potential hohe Zellspannungen und dadurch hohe Energiedichten zu liefern. Zudem wird eine mechanische Degradation verhindert, da die Volumenänderung des Wirtsgitters nur geringfügig bzw. nicht vorhanden ist. Zudem wurde bisher noch nicht beobachtet, dass unter Bildung von Gasen die Fluoridanionen des Wirtsgitters elektrochemisch oxidiert wurden, da Fluor eine erhöhte Elektronegativität gegenüber Sauerstoff hat.

**Ausführungsbeispiele**

Die Erfindung wird im Folgenden anhand von einem Ausführungsbeispiel und den Figuren näher erläutert. Hierbei zeigen:

**Fig. 1a** einen Zyklenstabilitätstest einer LiCaFeF6/Kohlenstoff/Binder-Kathode vs. Li⁺/Li,

**Fig.1b** einen Verlauf des Potenzials der $LiCaFeF_6$/Kohlenstoff/Binder Kathode vs. Li⁺/Li bei einer C-Rate von C/20,

**Fig. 2a** eine spezifische Kapazität einer $LiCaFeF_6$/Kohlenstoff/Binder Kathode vs. Li⁺/Li bei unterschiedlichen C-raten,

**Fig. 2b** eine spezifische Kapazität einer $LiCaFeF_6$/Kohlenstoff/Binder Kathode vs. die C-Rate.

**Fig. 3a.** eine Entwicklung der in situ XRD-Diffraktogramme während des Entladens (Li-Einbau) und Ladens (Li-Ausbau) einer $Li_{1+x}CaFeF_6$/Li - Zelle,

**Fig. 3b** die entsprechenden verfeinerten Ergebnisse der Gitterparameter und Volumenänderung der $LiCaFeF_6$-Kristallstruktur während des Entladens (Li-Einbau),

**Fig. 3c** die entsprechenden verfeinerten Ergebnisse der Gitterparameter und Volumenänderung der $LiCaFeF_6$-Kristallstruktur während des Ladens (Li-Ausbau).

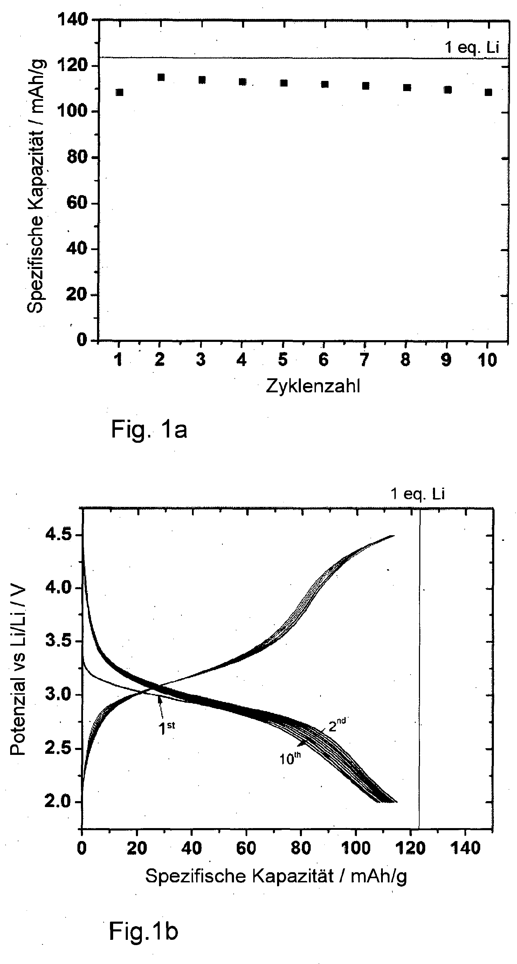

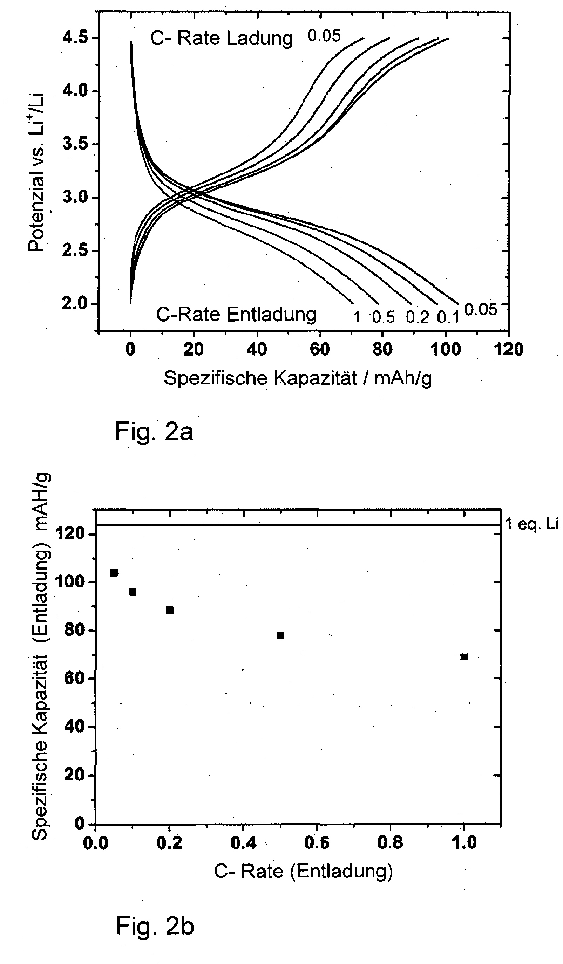

**Fig. 1a, 1b, 1a** und **2b** zeigen einen Zyklenstabilitätstest und einen Leistungstest von einer LiCaFeF₆/Kohlenstoff/Binder-Kathode vs. Li⁺/Li zzgl. den Lade bzw. Entladekurven. Der Anteil von LiCaFeF₆ im LiCaFeF₆/Kohlenstoff/Binder-Komposite beträgt 72 %. Als Elektrolyte wurde eine EC:DMC 1:1 Mischung mit $LiPF_6$ als Leitsalz verwendet. Als Separator wurde ein Glasfaser Separator verwendet. Die theoretische Kapazität bezogen auf 1 eq. Lithium beträgt 123 mAh/g. Die entsprechende Gleichung der Reaktion bei der Lithiierung und Delithiierung ist folgende:

$$LiCaFeF_6 + Li^+ + e^- \leftrightarrows Li_2CaFeF_6$$

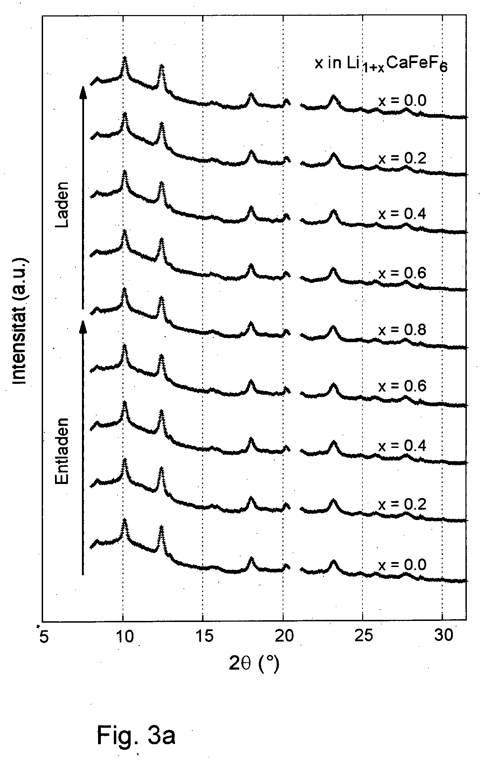

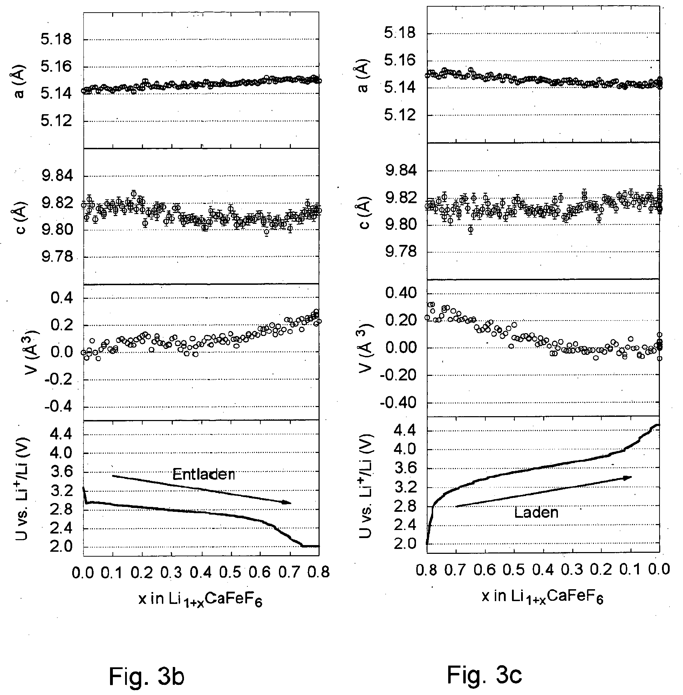

Mittels in situ Röntgenbeugung konnten die strukturelle Stabilität und der "zero-strain"-Effekt des LiCaFeF6-Wirtsgitters während des Zyklierens gegen eine Li-Anode nachgewiesen werden. Fig. 3a, 3b und 3c zeigen die Entwicklung der Beugungsreflexe während des ersten Entlade- und Ladezyklus zu verschiedenen Zeitpunkten des Redox-Prozesses. Während des Ein- und Ausbaus von Li-Ionen ändern sich die Reflexpositionen- und Intensitäten nur unmerklich. Eine Verfeinerung der Diffraktogramme ergibt eine minimale Veränderung der Gitterparameter und eine damit verbundene Volumenänderung von < 0.3 % bei einer Insertionsmenge von 0.8 Mol Li+ pro Formeleinheit $LiCaFeF_6$.

Die Darstellung von LiCaFeF6 erfolgt über inniges Vermischen der vorgetrockneten binären Metallfluoride (LiF, CaF2, FeF3; Sigma Aldrich). Anschließend werden diese bei 650°C 10h in einer Kupferampulle unter Schutzgas kalziniert. Das erhaltene Pulver wird mit einem Leitfähigkeitsadditiv (Super C65, Timcal) und einem Binder (PvdF, KYNAR Powerflex LBG-1, Arkema) (2.7g; 72/25/3 Gewichtsprozent) in einer Planetenkugelmühle für 24 Stunden vermahlen. Die 3 mm Mahlkörper (100 g) bestanden aus Yttrium stabilisierten ZrO2. Nach dem Abtrennen der Mahlkörper wurde der LiCaFeF6/Kohlenstoff/Binder-Komposit mit N-Methylpyrolidon aufgenommen und zu einem Schlicker verarbeitet. Dieser wurde auf einem Aluminium Ableiter aufgetragen, bei 80°C für 24h getrocknet und in einer 2-Elektroden Swagelok Zelle gegen Lithium Metall zykliert. Als Separator wurde ein GF/C Whatman Filter verwendet. Als Elektrolyt wurde ein EC:DMC Gemisch 1:1 mit 1M LiPF6 als Leitsalz eingesetzt.

**Patentansprüche**

1. Elektrodenmaterial umfassend mindestens ein Lithium-Metall-Fluorid, wobei das Lithium-Metall-Fluorid folgende Formel aufweist: $Li_{1+x}Me_1^{2+}Me_2^{(3-x)+}F_6$ mit $0<x\leq1$,

   - wobei $Me_1$ mindestens ein Metall aus der Liste der Elemente Ca, Cd, Sr, Ba oder Pb ist und $Me_2$ mindestens ein Metall aus der Liste der Elemente Ti, V, Cr, Fe, Co oder Ni ist,
   - wobei $Me_1$ ungleich $Me_2$ ist und
   - wobei $Me_1$ ein Metallion der Oxidationsstufe +II und $Me_2$ ein Metallion der Oxidationsstufe +III-x ist, und
   - wobei die Kristallstruktur des Lithium-Metall-Fluorids eine Colquiriite-Struktur ist,
   - und wobei beim Ein- und Ausbau von einem zu insertierenden Lithium-Kation in das Elektrodenmaterial während der Zyklierung eine Volumenänderung der Kristallstruktur von kleiner als 2% stattfindet.

2. Elektrodenmaterial umfassend mindestens ein Lithium-Metall-Fluorid nach Anspruch 1, wobei das Verhältnis der Metallionenradien r der Metalle $Me_1$ zu $Me_2$ $\dfrac{r(Me_1)}{r(Me_2)}$ größer ist als 1,4.

3. Elektrodenmaterial umfassend mindestens ein Lithium-Metall-Fluorid nach einem der Ansprüche 1 oder 2, wobei Mei Kalzium (Ca) und $Me_2$ Eisen (Fe) ist.

4. Verfahren zur Herstellung eines Elektrodenmaterials umfassend mindestens ein Lithium-Metall-Fluorid nach einem der Ansprüche 1 bis 3 mit den Verfahrensschritten:

   a) Bereitstellen mindestens eines Li-Fluorids, mindestens eines $Me_1$-Fluorids und mindestens eines $Me_2$-Fluorids als binäre Fluoride als Edukte,
   b) Vortrocknen der binären Fluoride,
   c) Mischen der Edukte zu einem Gemisch,
   d) Kalzinieren des Gemischs unter Schutzgas, wodurch das Lithium-Metall-Fluorid in Form eines pulverförmiges Materials erhalten wird,
   e) Hinzufügen eines Leitfähigkeitsadditivs und anschließend eines Binders zu dem Gemisch, sodass ein Elektrodenmaterial umfassend mindestens ein Lithium-Metall-Fluorid entsteht sowie
   f) Anbringen des Elektrodenmaterials an einen Ableiter.

5. Lithium-Ionen-Zelle umfassend mindestens ein Elektrodenmaterial nach Anspruch 1 bis 3, umfassend ein Lithiumtitanat als Anodenmaterial in Kombination mit dem mindestens einen Lithium-Metall-Fluorid als Kathodenmaterial.

6. Lithium-Ionen-Batterie mit mindestens einer Lithium-Ionen-Zelle, die mindestens ein Elektrodenmaterial umfassend mindestens ein Lithium-Metall-Fluorid nach einem der Ansprüche 1 bis 3 oder 5 umfasst.

**Claims**

1. Electrode material comprising at least one lithium metal fluoride wherein said lithium metal fluoride has the following formula: $Li_{1+x}Me_1^{2+}Me_2^{(3-x)+}F_6$ mit $0<x\leq1$,

   - with $Me_1$ being at least one metal of the list of elements Ca, Cd, Sr, Ba or Pb, and $Me_2$ being at least one metal of the list of elements Ti, V, Cr, Fe, Co or Ni,
   - with $Me_1$ being unequal to $Me_2$ and
   - with $Me_1$ being a metal ion of oxidation state +II, and $Me_2$ being a metal ion of oxidation state +III-x, and
   - with the crystalline structure of the lithium metal fluoride being a Colquiriite structure,
   - and wherein during the insertion and removal of a lithium cation to be inserted during the cycling a volume change of the crystalline structure of less than 2 % takes place.

2. Electrode material comprising at least one lithium metal fluoride according to claim 1, with the ratio of the radii r of the metal ions $Me_1$ to $Me_2$ $\dfrac{r(Me_1)}{r(Me_2)}$ being greater than 1.4.

3. Electrode material comprising at least one lithium metal fluoride according to one of the claims 1 or 2, with $Me_1$ being calcium (Ca) and $Me_2$ being iron (Fe).

4. Method for preparing an electrode material comprising at least one lithium metal fluoride according to one of the claims 1 to 3 and the following process steps:

   a) providing at least one Li fluoride, at least one $Me_1$ fluoride, and at least one $Me_2$ fluoride as binary fluorides as educts,
   b) pre-drying the binary fluorides,

c) mixing the educts to a mixture,

d) calcinating the mixture under inert gas, wherein the lithium metal fluoride is obtained in the form of a powdery material

e) adding a conductivity additive and subsequently a binder to the mixture thus forming an electrode material comprising at least one lithium metal fluoride and

f) applying the electrode material to a collector.

5. Lithium-ion cell comprising at least one electrode material according to one of the claims 1 to 3, comprising a lithium titanate as anode material combined with the at least one lithium metal fluoride as cathode material.

6. Lithium-ion battery with at least one lithium-ion cell, comprising at least one electrode material, said electrode material comprising at least one lithium metal fluoride according to one of the claims 1 to 3 or 5.

**Revendications**

1. Matériau d'électrode comprenant au moins un fluorure de lithium et de métal, selon lequel le fluorure de lithium et de métal présente la formule suivante : $Li_{1+x}Me_1^{2+}Me_2^{(3-x)+}F_6$ avec $0<x\leq1$,

  - $Me_1$ étant au minimum un métal de la liste d'éléments: Ca, Cd, Sr, Ba ou Pb et $Me_2$ au minimum un métal de la liste d'éléments Ti, V, Cr, Fe, Co ou Ni,
  - $Me_1$ étant différent de $Me_2$ et
  - $Me_1$ étant un ion métallique de degré d'oxydation +II et $Me_2$ un ion métallique de degré d'oxydation +III-x, et
  - la structure cristalline du fluorure de lithium et de métal étant une structure colquiriite,
  - et lors de l'insertion et l'extraction d'un cation lithium à insérer dans le matériau d'électrode pendant le cyclage, un changement de volume de la structure cristalline inférieur à 2% ayant lieu.

2. Matériau d'électrode comprenant au moins un fluorure de lithium et de métal selon la revendication 1, la relation entre les rayons r des ions métalliques $Me_1$ et $Me_2$ $\dfrac{r(Me_1)}{r(Me_2)}$ est supérieur à 1,4.

3. Matériau d'électrode comprenant au moins un fluorure de lithium et de métal selon l'une des revendications 1 ou 2, $Me_1$ étant du calcium (Ca) et $Me_2$ du fer (Fe).

4. Procédé de fabrication d'un matériau d'électrode selon l'une des revendications 1 à 3 comprenant les étapes consistant à :

  a) sélectionner au moins un fluorure de lithium, au moins un fluorure de $Me_1$, et au moins un fluorure de $Me_2$ en tant que fluorures binaires et précurseurs,

  b) présécher les fluorures binaires,

  c) mélanger les précurseurs pour former un mélange,

  d) calciner le mélange sous atmosphère inerte, un fluorure de lithium et de métal sous forme de poudre étant ainsi obtenu,

  e) ajouter un additif de conductivité et ensuite un liant au mélange, un matériau d'électrode comprenant un fluorure de lithium et de métal étant ainsi obtenu,

  f) appliquer le matériau d'électrode à un collecteur.

5. Cellule de batterie lithium-ion comprenant au moins un matériau d'électrode selon l'une des revendications 1 à 3, comprenant un titanate de lithium en tant que matériau d'anode en combinaison avec au moins un fluorure de lithium et de métal en tant que matériau de cathode.

6. Batterie lithium-ion avec au moins une cellule de batterie lithium-ion, comprenant au moins un matériau d'électrode, ledit matériau d'électrode comprenant au moins un fluorure de lithium et de métal selon l'une des revendications 1 à 3 ou 5.

Fig. 1a

Fig.1b

Fig. 2a

Fig. 2b

8

Fig. 3a

Fig. 3b

Fig. 3c

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- JP 2001176510 A

- DE 112012001463 T5

### In der Beschreibung aufgeführte Nicht-Patentliteratur

- **OHZUKU et al.** Zero-strain insertion material for Li[Li1/3Ti5/3]O4 for rechargeable lithium cells. *J. Electrochem. Soc.,* 1995, vol. 142 (5), 1431
- **LIAO et al.** Lithium Intercalation in LiFe2F6 and LiMgFeF6 Disordered Trirutile-Type Phases. *J. Electrochem. Soc.,* 2010, vol. 157 (3), A355
- **LIESER et al.** Sol-Gel Based Synthesis of LiNiFeF6 and Its Electrochemical Characterization. *J. Electrochem. Soc.,* 2014, vol. 161 (6), A1071
- **CHO et al.** Zero-strain intercalation cathode for rechargeable Li-ion cell. *Anw. Chem. Int. Ed.,* 2001, vol. 40 (18), 3367

- **KOYAMA et al.** New fluoride cathodes for rechargeable lithium batteries. *Journal of the electrochemical Society,* 2000, vol. 147, 3633
- **YIN et al.** Crystal chemistry of Colquiriitetype fuorides. *Chem. Mat.,* 1992, vol. 4, 645
- **VIEBAHN et al.** Notizen: Fluor-Trirutile LiMeIIMeIIIF6 und zwei neue Sauerstoff-Trirutile LiMeVMeVIO6. *Zeitschrift für Naturforschung - Section B Journal of Chemical Sciences,* 1967, vol. 22
- **PENG LIAO et al.** Lithium intercalation in LiFe2F6 and LiMgFeF6 disordered trirutile-type phases. *J. Electrochem. Soc.,* 2010, vol. 157, A355